# EUROPÄISCHE PATENTSCHRIFT

(11) **EP 1 390 627 B1**
(45) Veröffentlichungstag und Bekanntmachung des Hinweises auf die Patenterteilung: **29.03.2006**
(21) Anmeldenummer: 02742773.1
(22) Anmeldetag: 21.05.2002
(51) Int. Cl.: F16C 11/06

(54) **KUGELGELENK**
BALL JOINT
ARTICULATION SPHERIQUE

(30) Priorität: 22.05.2001 DE 10125227
(43) Veröffentlichungstag der Anmeldung: 25.02.2004
(73) Patentinhaber: ZF Lemförder Metallwaren AG, 49441 Lemförde (DE)
(72) Erfinder: BRÖKER, Klaus, 49163 Bohmte-Hunteburg (DE)
(86) Internationale Anmeldenummer: PCT/DE2002/001857
(87) Internationale Veröffentlichungsnummer: WO 2002/095247

(56) Entgegenhaltungen:
- DE-A- 19 755 284
- DE-A- 19 930 445
- DE-C- 3 619 004
- FR-A- 2 444 192
- US-A- 4 076 344
- US-A- 4 690 581
- US-A- 6 164 861

## Beschreibung

Die Erfindung betrifft ein Kugelgelenk mit einem von einem Deckel verschlossenen Gehäuse, einer Lagerschale und einer darin drehbar und kippbar aufgenommenen Gelenkkugel mit Kugelzapfen, der mit einem Schaft aus einer dem Deckel gegenüberliegenden Austrittsöffnung des Gehäuses herausragt, wobei die an ihrer Außenseite mit Vor- und Rücksprüngen versehene Lagerschale sowie ein entropieelastisches, vorgespanntes Federelement von dem Deckel im Gehäuse festgesetzt sind.

Ein Kugelgelenk dieser Art ist aus der DE 199 30 445 A1 bekannt geworden. Die in dem Gehäuse festgesetzte Lagerschale weist einen axial verlaufenden, durchgehenden Schlitz und der Deckel auf seiner der Lagerschale zugewandten Innenseite das zwischen Deckel und Lagerschale festgesetzte vorgespannte Federelement auf, welches von dem Deckel gegen die angrenzenden Vor- und Rücksprünge in Form von radial verlaufenden Rippen und Rillen der Lagerschale gepresst ist. Die Lagerschale ist zur Ermöglichung des Einsatzes einer Gelenkkugel mit dem axial verlaufenden, durchgehenden Schlitz versehen.

Dieser Schlitz ist mit dem Nachteil behaftet, dass bei entsprechenden axialen und radialen Belastungen des Kugelgelenkes Material aus der Lagerschale in den Schlitz "einfließt", dadurch die Verschlusskräfte gelockert und das Kugelgelenk zu einem unerwünschten Spiel zwischen Gelenkkugel und Lagerschale neigt.
Hinzu kommt, dass die Lagerschale eine gewisse Elastizität aufweisen muss, um die Gelenkkugel unter Aufweitung des Schlitzes in die Lagerschale pressen zu können. Aus diesem Grunde kommen für die Lagerschale nur solche Materialien in Frage, welche diese Elastizität aufweisen, was jedoch wiederum zu Lasten der Verschleißfestigkeit geht.

Bei einem gattungsfremden Kugelgelenk gemäß der DE 36 19 004 C1 besteht die Lagerschale aus zwei konzentrisch ineinandergefügten Lagerschalen, nämlich einer inneren Lagerschale aus einem weichelastischen Material und einer Außenschale aus einem hartelastischen Material, die mit einem ein Fettreservoir aufnehmenden Durchbruch sowie konzentrisch verlaufenden Schmiernuten an ihren Kontaktflächen versehen sind. Die Außenschale ist mit äquidistanten, axial verlaufenden Längsschlitzen versehen, um unter radialer Aufweitung ein Einsetzen des Kugelkopfes zu ermöglichen. Bei starker radialer Belastung beginnt das Material der Außenschale in diese Radialschlitze zu fließen, wodurch das Spiel zwischen Kugel und Außenschale zwangsläufig zunimmt. Aus diesem Grunde ist dieses Kugelgelenk auf die materialabhängigen Belastungsmöglichkeiten des Materials der Außenschale, hier Polyoxymethylen (POM), mit ihren Radialschlitzen beschränkt. Ein selbsttätiger, das Spiel ausgleichender Kompensationsmechanismus fehlt.

Aus der DE 197 55 284 A1 ist ein weiteres gattungsfremdes Kugelgelenk bekannt geworden, dessen Gelenkkugel abschnittsweise von einer Lagerschale umgeben ist, deren kalottenförmige Innenmantelfläche mit ihrer zylindrischen Außenmantelfläche in eine Aufnahmebohrung eines Gehäuses eingesetzt ist, wobei die Lagerschale an ihrer Außenmantelfläche in einer aus einem gummielastischen Elastomer hergestellten Hülse eingebettet ist, die in der Aufnahmebohrung anliegt. Dabei soll die, offenkundig aus einem entropieelastischen Material mit geringerer Federhärte als die Lagerschale hergestellte Hülse Schwingungen zwischen der Gelenkkugel und dem Außengehäuse dämpfen. Da die Lagerschale und die Hülse in bezug auf die Gelenkkugel zwei hintereinander geschaltete Federn bilden, ist deren Gesamtfederhärte stets kleiner als die einzelnen Federhärten von Lagerschale und Hülse. Das führt neben einem unerwünschten Spiel zu einem Kugelgelenk mit geringer Eigendämpfung. Ein bei voranschreitendem Verschleiß das Spiel zwischen Kugelgelenk und Lagerschale ausgleichendes Kompensationsmittel fehlt.

Vom nächstkommenden Stand der Technik ausgehend, liegt der Erfindung die Aufgabe zugnmde, ein Kugelgelenk der eingangs genannten Gattung zu schaffen, welches sich bei einfachem Aufbau und hoher Verschleißfestigkeit nicht nur durch eine Verdrehsicherung der Lagerschale, sondern auch durch einen federnden Spielausgleichs-Mechanismus des Kugelzapfens in radialer und axialer Richtung auszeichnet, den dieser gegenüber dem Kugelgelenkgehäuse zurücklegen kann.

Diese Aufgabe wird in Verbindung mit dem eingangs genannten Gattungsbegriff erfindungsgemäß dadurch gelöst, dass die Lagerschale von einer unteren und einer oberen, jeweils geschlossenen Lagerschale gebildet ist und die untere, die obere Lagerschale teilweise übergreifende Lagerschale an ihrer übergreifenden Innenseite und/oder die obere Lagerschale an ihrer Außenseite mit den Vor- und den Rücksprüngen versehen ist, mit welchen das entropieelastische Federelement form- und/oder kraftschlüssig unter Wirkung des Deckels in seiner Verschlusslage zusammenwirkt und beide Lagerschalen drehunbeweglich miteinander kuppelt. Durch diese Anordnung kann die die Hauptbelastungen aufnehmende untere Lagerschale aus einem hochverschleißfesten Material mit geringem Spiel bestehen, wohingegen die obere, geringere Kräfte aufzunehmende Lagerschale aus dem bewährten herkömmlichen, demgegenüber weicheren Kunststoffen preiswert hergestellt werden kann. Durch die form- und/oder kraftschlüssige, in jedem Fall federelastisch vorgespannte entropieelastische Kupplung der oberen und der unteren Lagerschale mit dem Federelement und dem Deckel wird eine Gelenkelastizität erzielt, die bei geringem Spiel aufgrund der Vorspannung ein größer werdendes Spiel infolge eines Verschleißes automatisch aufgrund der Vorspannung kompensiert.

Damit kann die untere, aus einem sehr harten und verschleißfesten Material, wie beispielsweise PEEK, PEI, PA 66, GFK (A3 WG6), hergestellte Lageschale, die aufgrund ihres Übergriffs der oberen Lagerschale über die Meridianebene der Gelenkkugel hinausreicht, sowohl den größten Teil der axial als auch der möglichen Radialkräfte aufnehmen, wohingegen der oberen Lagerschale vornehmlich eine Übertragung der vom vorgespannten Federelement ausgehenden, die Gelenkelastizität bestimmenden entropieelastischen Kräfte zukommt. In jedem Fall dient - wie beim nächstkommenden Stand der Technik - der Deckel als Spannelement.

Vorteilhaft ist die untere Lagerschale an ihrem die obere Lagerschale übergreifenden Ende mit einem Flansch versehen, der zur Verdrehsicherung zwischen einem Absatz des Gehäuses und dem Deckel drehfest verspannt ist.

Zur Erhöhung dieser Verdrehsicherung ist vorteilhaft auch der Deckel an seiner Unterseite mit Vor- und Rücksprüngen versehen, in welche das entropieelastische Federelement eingreift und beide Lagerschalen formschlüssig sowie drehfest mit dem Deckel kuppelt. Dadurch wird eine stabile, sämtlichen Erfordernissen genügende Verdrehsicherung von Deckel und entropieelastischem Federelement sowie oberer und unterer Lagerschale geschaffen. Vorteilhaft werden die Vor- und Rücksprünge der beiden Lagerschalen und im Deckel aus bekannten Rippen und Rillen gebildet, die sämtlich radial zur Längsachse sowie äquidistant verlaufen. Dadurch kann das entropieelastische Federelement in die Rillen der beiden Lagerschalen und des Deckels formschlüssig eingreifen und somit eine sowohl form- als auch kraftschlüssige Kupplung bewirken.

Zu diesem Zweck ist vorteilhaft die untere Lagerschale in der Nähe ihres Flansches auf ihrer Innenseite mit einem umlaufenden Kranz von Rippen und Rillen versehen, während die obere Lagerschale eine an sich bekannte Haubenform aufweist und an ihrer Außenseite mit den radial verlaufenden Rippen und Rillen versehen ist.

Nach einer vorteilhaften Weiterbildung der Erfindung weisen zum formschlüssigen Einsatz des entropieelastischen Federelementes die Rippen der oberen Lagerschale eine radial umlaufende, im Querschnitt etwa trapezoedale Ausnehmung auf, wobei sämtliche Ausnehmungen einen kreisförmig umlaufenden Ring bilden, an welchen die äquidistanten Vor- und Rücksprünge angrenzen. Dadurch erleichtert sich der Einsatz des entropieelastischen Federelementes, welches vorteilhaft aus einem Elastomerring besteht, dessen Querschnittsform sich außenseitig aus einem Viereck und innenseitig aus einem Dreieck zusammensetzt, wobei sämtliche Kantenbereiche zur Herabsetzung von Kerbwirkungen radial abgerundet sind.

Nach einer besonders vorteilhaften Weiterbildung der Erfindung überragt das entropieelastische Federelement die Oberkante des Flansches der unteren Lagerschale vor Einsatz des Deckels um eine der gewünschten Federvorspannung entsprechende Höhe. Sobald der Deckel gegen die Oberseite des umlaufenden Flansches der unteren Lagerschale gepresst wird, ist das Federelement mit der gewünschten Vorspannung beaufschlagt, was somit beim Verschließen des Deckels automatisch kraft- oder weggesteuert erfolgen kann.

Vorteilhaft liegt das entropieelastische Federelement an einer seiner Dreieckflächen und einer seiner ebenen Rechteckflächen auf den Ausnehmungen der Rippen der oberen Lagerschale auf und mit seiner ebenen Außenumfangsseite an dem Kranz der Rillen und Rippen der unteren Lagerschale an, wobei in jedem Fall das Federelement nach Erreichen seiner Montageendlage unter der Federvorspannung gegen diese Rippen und in die Rillen sowie gegen die gegebenenfalls vorhandenen Rippen und in die Rillen des Deckels gepresst ist.

Das entropieelastische Federelement ist vorteilhaft aus einem Acrylnitril-Butadien-Polymerisat mit einer Shore-Härte A von 80 ± 5 hergestellt.

Ein Ausführungsbeispiel der Erfindung ist in den Zeichnungen dargestellt. Dabei zeigen:
Fig. 1: einen Gesamtquerschnitt durch das erfindungsgemäße Kugelgelenk, wobei die linke Bildhälfte den ungespannten und die rechte Bildhälfte den vorgespannten Montageendzustand zeigt,
Fig. 2 die Seitenansicht der oberen Lagerschale,
Fig. 3 die Draufsicht der oberen Lagerschale in Richtung des Pfeiles III von Fig. 2,
Fig. 4 die Unteransicht der oberen Lagerschale in Richtung des Pfeiles IV von Fig. 2,
Fig. 5 eine diametrale Querschnittsansicht durch die obere Lagerschale gemäß der Linie V-V von Fig. 3 in vergrößerter Darstellung,
Fig. 6 die Seitenansicht der unteren Lagerschale mit ihrem Flansch,
Fig. 7 die Draufsicht der unteren Lagerschale in Richtung des Pfeiles VII von Fig. 6,
Fig. 8 die Schnittansicht der unteren Lagerschale entlang der Linie VIII-VIII von Fig. 7,
Fig. 9 die perspektivische Ansicht von oberer Lagerschale, unterer Lagerschale mit eingefügtem ringförmigem Federelement in teilweisem Schnitt und
Fig. 10 die diametrale Schnittansicht des entropieelastischen Federelementes in vergrößerter Darstellung.

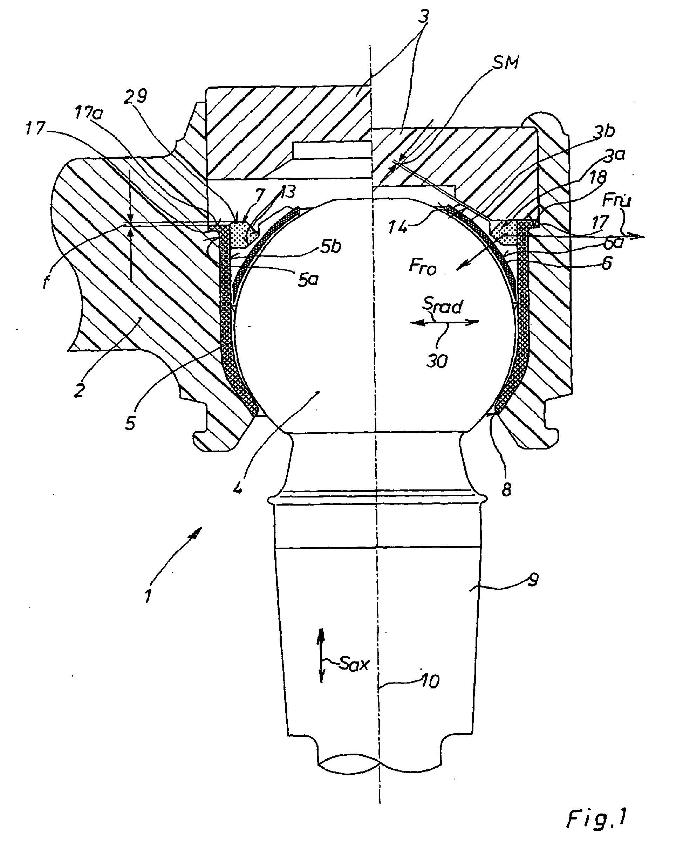

Gemäß Fig. 1 besteht das erfindungsgemäße Kugelgelenk 1 im wesentlichen aus einem Gehäuse 2, einem Deckel 3 und einer Gelenkkugel 4, die in einer unteren Lagerschale 5 und einer oberen Lagerschale 6 aufgenommen ist. Beide Lagerschalen 5, 6 wirken mit einem entropieelastischen Federelement 7 in Form eines Ringes zusammen, der der Unterseite 3a des Deckels 3 in der in der rechten Figurenhälfte dargestellten Montageendlage gegen beide Lagerschalen 5, 6 gepresst wird. Aus der dem Deckel 3 gegenüberliegenden Öffnung 8 tritt der Gelenkzapfen 9 der Gelenkkugel 4 aus dem Gehäuse 2 heraus.

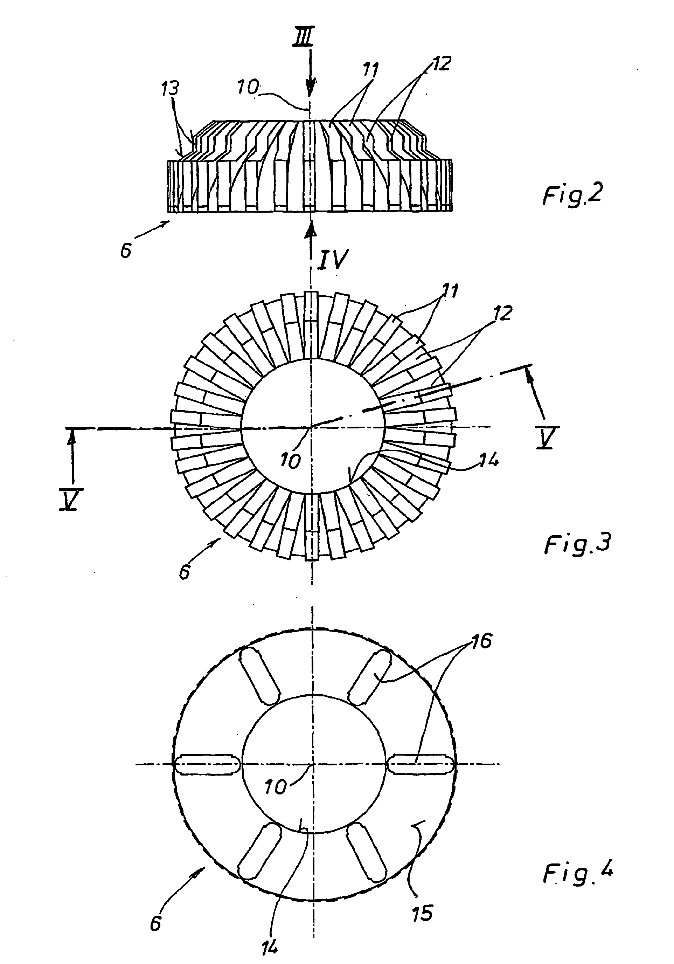

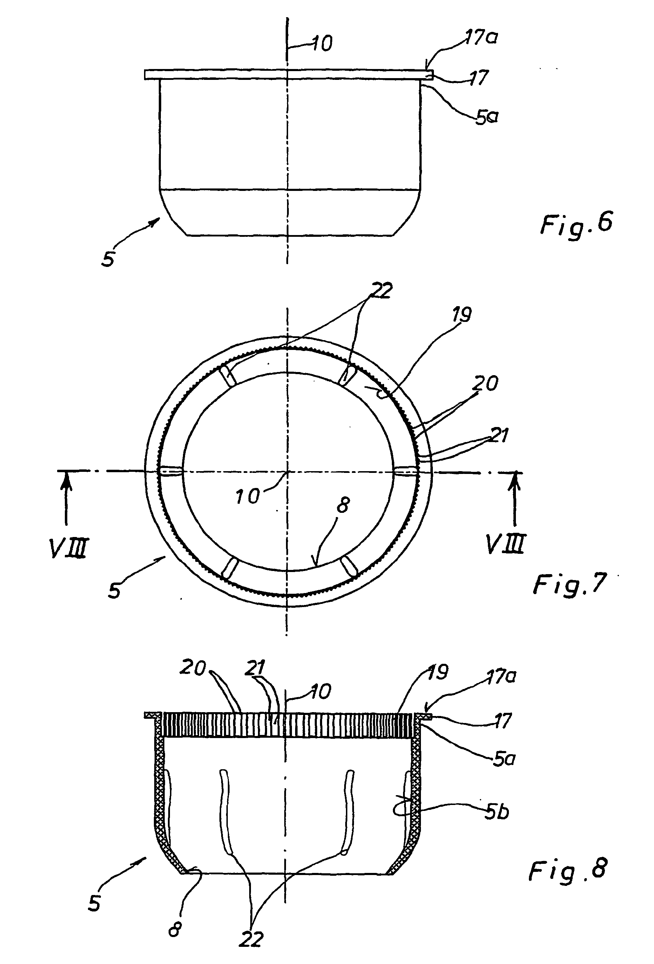

Wie aus den Figuren 2 bis 5 entnommen werden kann, ist die obere Lagerschale 6 an ihrer Außenseite 6a mit zur Längsachse 10 des Kugelgelenks 1 radial verlaufenden Rippen 11 und Rillen 12 versehen. Die Rippen 11 weisen eine radial umlaufende trapezoedale Ausnehmung 13 auf (s. Fig. 5), in die das noch zu beschreibende entropieelastische sowie ringförmige Federelement 7 eingefügt wird. An seiner Oberseite ist die haubenförmig gestaltete, obere Lagerschale 6 mit einer kreisrunden Durchtrittsöffnung 14 und an ihrer Unterseite 15 mit sechs radial angeordneten Schmiertaschen 16 versehen. Diese obere Lagerschale 6 kann aus bewährtem POM, PA 66 oder auch aus hochverschleißfestem PEEK oder PEI bestehen.

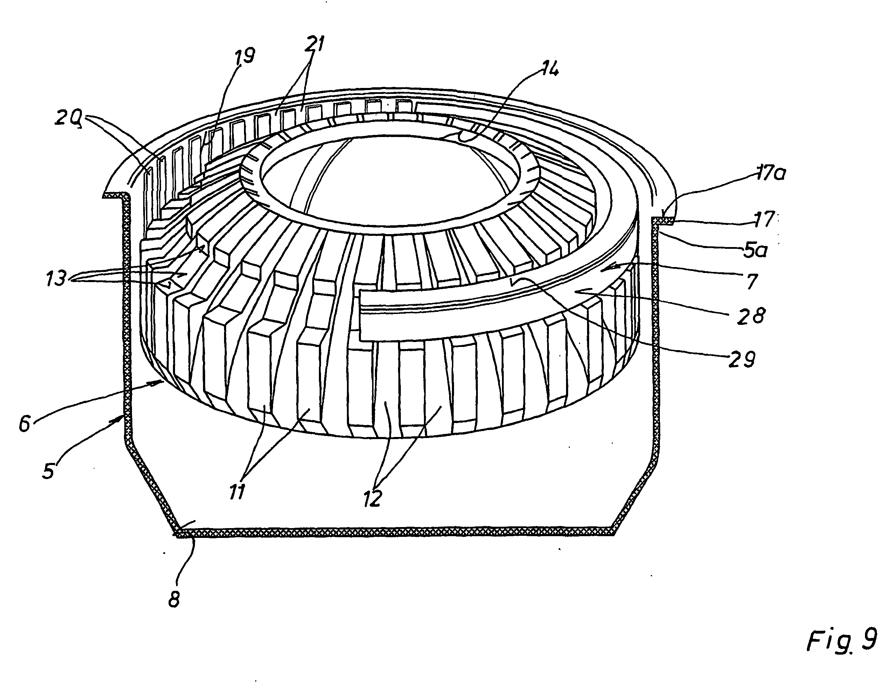

Gemäß den Figuren 6 bis 8 ist die untere Lagerschale 5 an ihrem die obere Lagerschale 6 übergreifenden Ende 5a mit einem Flansch 17 versehen, der zwischen einem Absatz 18 des Gehäuses 2 und dem Deckel 3 drehfest verspannt ist. Wie insbesondere aus den Figuren 7 und 8 entnommen werden kann, ist die untere Lagerschale 5 in der Nähe ihres Flansches 17 auf ihrer Innenseite 5b mit einem umlaufenden Kranz 19 von Rippen 20 und Rillen 21 versehen. Ferner sind in die Innenseite 5b der unteren Lagerschale 5 insgesamt sechs radial verlaufende Schmiertaschen 22 angeordnet.

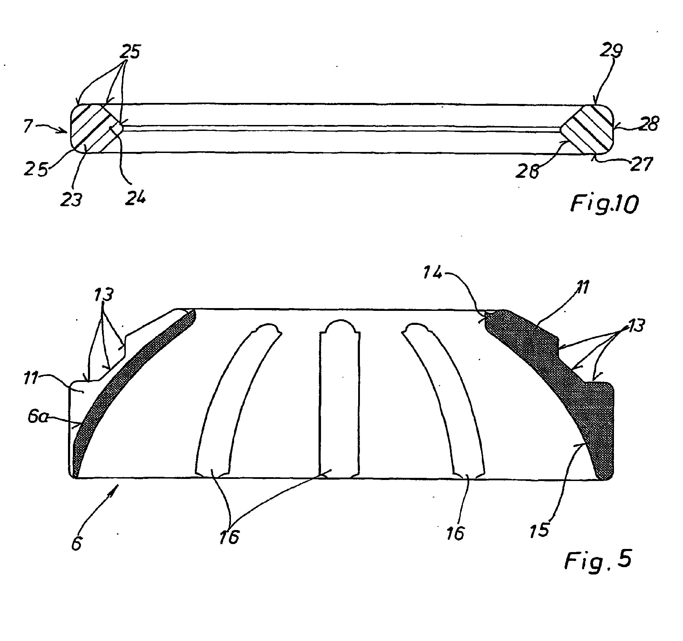

Der in Fig. 10 dargestellte Elastomerring 7 weist eine Querschnittsform auf, die sich außenseitig aus einem Viereck 23 und innenseitig aus einem gleichseitigen Dreieck 24 zusammensetzt, wobei sämtliche Kantenbereiche 25 radial abgerundet sind.

Wie aus Fig. 1 in Verbindung mit Fig. 9 entnommen werden kann, liegt das entropieelastische Federelement 7 mit einer seiner beiden Dreiecksflächen, nämlich mit der Dreiecksfläche 26 und einer seiner ebenen Rechteckflächen, nämlich mit der Rechteckfläche 27 auf den Ausnehmungen 13 der Rippen 11 der oberen Lagerschale 6 auf und mit seiner ebenen Außenumfangsseite 28 an dem Kranz 19 der Rillen 21 und der Rippen 20 der unteren Lagerschale 5 an und wird von dem Deckel 3 nach seiner Montageendlage (s. rechte Figurenhälfte von Fig. 1) unter einer Federvorspannung Fv gegen diese Flächen und - soweit vorhanden - auch gegen die Rippen und Rillen des Deckels 3 gepresst.

Dabei wird die Federvorspannung Fv von der aus der linken Figurenhälfte von Fig. 1 ersichtlichen Höhe f bestimmt, um welche in ungespannter Lage die Rechteckseite 29 des entropieelastischen Federelementes 7 die Oberkante 17a des Flansches 17 überragt.

Nach dem Zusammenpressen des entropieelastischen Federelementes 7 gemäß der rechten Bildhälfte von Fig. 1 wird ein Teil des Werkstoffes des Federelementes sowohl in die Rillen 12 der oberen Lagerschale 6 als auch in die Rillen 21 der unteren Lagerschale 5 sowie in evtl. im Deckel 3 vorhandene Rillen gepresst. Um dieses Hineinpressen formschlüssiger zu gestalten, kann nach einer Weiterbildung der Erfindung das entropieelastische Federelement 7 an seinen Anlageflächen 27, 28, 29 ebenfalls mit vorspringenden Rippen versehen sein, die passgerecht in die entsprechenden Rillen 12, 21 eingreifen.

Wie aus Fig. 1 hervorgeht, wird die parallel zur Längsachse 10 wirkende Verschlusskraft Fv, welche die Vorspannkraft aufbringt, im Kräfteparallelogramm aufgespalten in eine radial auf die obere Lagerschale 6 wirkende und eine senkrecht auf die Innenwandung der unteren Lagerschale 5 wirkende Kraftkomponente. Die Kraftkomponente auf die untere Lagerschale FrU wird vom Gehäuse 2 aufgenommen, so dass eine unerwünschte Abbiegung in Richtung des Pfeiles FrU unterbleibt. Die Kraftkomponente FrO wird stets auf die obere Lagerschale 6 gelenkt und diese dadurch stets entsprechend spielfrei gegen die Gelenkkugel 4 gepresst. Damit bildet das entropieelastische Federelement 7 in Verbindung mit dem Deckel 3 und der oberen Lagerschale 6 in bezug auf die Gelenkkugel 4 des Kugelgelenks 1 ein Spielausgleichs-System, welches die Gelenkelastizität bestimmt.

Zusätzlich kann die Verbindung mit diesem Spielausgleichs-System das Spaltmaß SM zwischen der Unterseite 3b des Deckels 3 und den angrenzenden Rippen 11 der oberen Lagerschale 6 bestimmt werden, das zwischen 0 und einem maximal zulässigen Wert betragen kann.

Je häufiger Drucklasten auftreten, umso kleiner ist dieses Spaltmaß bemessen. Diese Drucklasten wirken parallel zur Längsachse 10. Somit lassen sich bei dauerhafter Verdrehsicherung der oberen Lagerschale 6 und der unteren Lagerschale 5 das Drehmoment MD, das während einer Dreh- oder Schwenkbewegung des Kugelzapfens 9 aufgebracht werden muss, ebenso wie der Weg Sₐₓ, den der Kugelzapfen 9 in axialer Richtung der Symmetrielängsachse 10 gegenüber dem Kugelgelenkgehäuse 2 sowie der Weg S_{rad}, den die Gelenkkugel 4 in radialer Richtung gemäß dem Pfeil 30 gegenüber dem Kugelgelenkgehäuse 2 federnd zurücklegen kann, leicht über die Vorspannung f sowie das Spaltmaß SM einstellen.
Das Dreh- bzw. Kippmoment oder Sₐₓ bzw. S_{rad} können demnach durch eine Verspannung der Kugelschalen erzeugt werden.

### Bezugszeichenliste

- Kugelgelenk: 1
- Gehäuse: 2
- Deckel: 3
- Unterseite des Deckels 3: 3a
- Gelenkkugel: 4
- untere Lagerschale: 5
- Oberseite der Lagerschale 5: 5a
- Innenseite der Lagerschale 5: 5b
- obere Lagerschale: 6
- Außenseite der Lagerschale 6: 6a
- Federelement: 7
- Öffnung: 8
- Gelenkzapfen: 9
- Längsachse des Kugelgelenks 1: 10
- Rippen: 11,20
- Rillen: 12, 21
- Ausnehmung: 13
- Durchtrittsöffnung: 14
- Unterseite: 15
- Schmiertaschen: 16, 22
- Flansch: 17
- Oberkante des Flansches 17: 17a
- Absatz des Gehäuses 2: 18
- Kranz: 19
- Viereck: 23
- Dreieck: 24
- Kantenbereich: 25
- Dreiecksfläche: 26

### Fortsetzung Bezugszeichenliste

- Rechteckefläche: 27
- Außenumfangsseite: 28
- Rechteckseite: 29
- Pfeil: 30
- Drehmoment: MD
- Höhe: f
- Federvorspannung: Fv
- Pfeil: FrU
- Spaltmaß: SM
- Kraftkomponente: FrO
- Wege: Sₐₓ, S_{rad}

## Patentansprüche

1. Kugelgelenk mit einem von einem Deckel verschlossenen Gehäuse, einer Lagerschale und einer darin drehbar und kippbar aufgenommenen Gelenkkugel mit Kugelzapfen, der mit einem Schaft aus einer dem Deckel gegenüberliegenden Austrittsöffnung des Gehäuses herausragt, wobei die an ihrer Außenseite mit Vor- und Rücksprüngen versehene Lagerschale sowie ein entropieelastisches, vorgespanntes Federelement von dem Deckel im Gehäuse festgesetzt sind, **dadurch gekennzeichnet, dass** die Lagerschale von einer unteren und einer oberen, jeweils geschlossenen Lagerschale (5, 6) gebildet ist und die untere, die obere Lagerschale (6) teilweise übergreifende Lagerschale (5) an ihrer übergreifenden Innenseite (5b) und die obere Lagerschale (6) an ihrer Außenseite (6a) mit den Vor- und den Rücksprüngen (20,21; 11, 12) versehen ist, mit welchen das entropieelastische Federelement (7) form- und/oder kraftschlüssig unter Wirkung des Deckels (3) in seiner Verschlusslage zusammenwirkt und beide Lagerschalen (5, 6) drehunbeweglich miteinander kuppelt.

2. Kugelgelenk nach Anspruch 1, **dadurch gekennzeichnet, dass** die untere Lagerschale (5) an ihrem die obere Lagerschale (6) übergreifenden Ende (5a) mit einem Flansch (17) versehen ist, der zwischen einem Absatz (18) des Gehäuses (2) und dem Deckel (3) drehfest verspannt ist.

3. Kugelgelenk nach Anspruch 1, **dadurch gekennzeichnet, dass** auch der Deckel (3) an seiner Unterseite (3a) mit Vor- und Rücksprüngen versehen ist, in welche das entropieelastische Federelement (7) eingreift und beide Lagerschalen (5, 6) formschlüssig sowie drehfest mit dem Deckel (3) kuppelt.

4. Kugelgelenk nach einem der Ansprüche 1 bis 3, **dadurch gekennzeichnet, dass** die Vor- und Rücksprünge der beiden Lagerschalen (5, 6) und im Deckel (3) aus bekannten Rippen (20, 11) und Rillen (21, 12) gebildet sind, die sämtlich radial zur Längsachse (10) sowie äquidistant verlaufen.

5. Kugelgelenk nach einem der Ansprüche 1 bis 4, **dadurch gekennzeichnet, dass** die untere Lagerschale (5) in der Nähe ihres Flansches (17) auf ihrer Innenseite (5b) mit einem umlaufenden Kranz (19) von Rippen (20) und Rillen (21) versehen ist.

6. Kugelgelenk nach einem der Ansprüche 1 bis 5,
**dadurch gekennzeichnet, dass** die obere Lagerschale (6) eine an sich bekannte Haubenform aufweist und an ihrer Außenseite (6a) mit den radial verlaufenden Rippen (11) und Rillen (12) versehen ist.

7. Kugelgelenk nach Anspruch 6, **dadurch gekennzeichnet, dass** die Rippen (11) der oberen Lagerschale (6) eine radial umlaufende, im Querschnitt etwa trapezoedale Ausnehmung (13) zum Einsatz des entropieelastischen Federelementes (7) aufweisen, wobei sämtliche Ausnehmungen (13) einen kreisförmig umlaufenden Ring bilden, an welchen die äquidistanten Vor- und Rücksprünge (11, 12) angrenzen.

8. Kugelgelenk nach einem der Ansprüche 1 bis 7, **dadurch gekennzeichnet, dass** das entropieelastische Federelement (7) aus einem Elastomerring besteht, dessen Querschnittsform sich außenseitig aus einem Viereck (23) und innenseitig aus einem Dreieck (24) zusammensetzt, wobei sämtliche Kantenbereiche (25) radial abgerundet sind.

9. Kugelgelenk-nach einem der Ansprüche 1 bis 8, **dadurch gekennzeichnet, dass** das entropieelastische Federelement (7) die Oberkante (17a) des Flansches (17) der unteren Lagerschale (5) vor Einsatz des Deckels (3) um eine der gewünschten Federvorspannung (Fv) entsprechende Höhe (f) überragt.

10. Kugelgelenk nach einem der Ansprüche 1 bis 9, **dadurch gekennzeichnet, dass** das entropieelastische Federelement (7) an einer seiner Dreieckflächen (26) und einer seiner ebenen Rechteckflächen (27) auf den Ausnehmungen (13) der Rippen (11) der oberen Lagerschale (6) aufliegt und mit seiner ebenen Außenumfangsseite (28) an dem Kranz (19) der Rillen (21) und Rippen (20) der unteren Lagerschale (5) anliegt sowie von dem Deckel (3) nach seiner Montageendlage unter der Federvorspannung (Fv) gegen diese Rippen (11, 20) und in die Rillen (12,21) sowie gegen die Rippen und in die Rillen des Deckels (3) gepresst ist.

11. Kugelgelenk nach einem der Ansprüche 1 bis 10, **dadurch gekennzeichnet, dass** das entropieelastische Federelement (7) an seinen Anlageflächen (26, 27, 28) ebenfalls mit vorspringenden Rippen versehen ist, die in die angrenzenden Rillen (21, 12) der unteren und der oberen Lagerschale (5, 6) sowie des Deckels (3) eingreifen.

12. Kugelgelenk nach einem der Ansprüche 1 bis 11, **dadurch gekennzeichnet, dass** die untere Lagerschale (5) aus einem hochverschleißfesten Kunststoff, wie PEEK, PEI, PA 66, GFK (A3 WG6), hergestellt ist.

13. Kugelgelenk nach einem der Ansprüche 1 bis 12, **dadurch gekennzeichnet, dass** die obere Lagerschale (6) entweder aus POM, PA 66 oder auch aus PEEK oder PEI besteht.

14. Kugelgelenk nach einem der Ansprüche 1 bis 13, **dadurch gekennzeichnet, dass** das entropieelastische Federelement (7) aus einem Acrylnitril-Butadien-Polymerisat mit einer Shore A-Härte von 80 ± 5 hergestellt ist.

## Claims

1. Ball joint with a housing which is closed by a cover, a bearing shell and a joint ball which is held in a rotatable and tiltable manner in the latter and has a ball pin which projects by way of a shank out of an outlet opening of the housing which lies opposite the cover, wherein the bearing shell, which is provided at its outside with projections and indentations, as well as an entropy-elastic, biased spring element are fixed in the housing by the cover, **characterised in that** the bearing shell is formed by a lower and an upper bearing shell (5, 6), in each case closed, and the lower bearing shell (5), which partly overlaps the upper bearing shell (6), is provided at its overlapping inside (5b) and the upper bearing shell (6) is provided at its outside (6a) with the projections and the indentations (20, 21; 11, 12) with which the entropy-elastic spring element (7) co-operates positively and/or non-positively under the action of the cover (3) in its closed position and couples the two bearing shells (5, 6) together such that they cannot rotate.

2. Ball joint according to Claim 1, **characterised in that** the lower bearing shell (5) is provided at its end (5a) which overlaps the upper bearing shell (6) with a flange (17) which is non-rotatably clamped between a shoulder (18) of the housing (2) and the cover (3).

3. Ball joint according to Claim 1, **characterised in that** the cover (3) is also provided at its underside (3a) with projections and indentations in which the entropy-elastic spring element (7) engages and couples the two bearing shells (5, 6) positively and non-rotatably to the cover (3).

4. Ball joint according to any one of Claims 1 to 3, **characterised in that** the projections and indentations of the two bearing shells (5, 6) and in the cover (3) are formed from known ribs (20, 11) and channels (21, 12) which all extend radially to the longitudinal axis (10) and equidistantly.

5. Ball joint according to any one of Claims 1 to 4, **characterised in that** the lower bearing shell (5) is provided with an encircling ring (19) of ribs (20) and channels (21) in the vicinity of its flange (17) on its inside (5b).

6. Ball joint according to any one of Claims 1 to 5, **characterised in that** the upper bearing shell (6) is of a hood shape which is known per se and is provided with the radially extending ribs (11) and channels (12) at its outside (6a).

7. Ball joint according to Claim 6, **characterised in that** the ribs (11) of the upper bearing shell (6) comprise a radially encircling recess (13) of an approximately trapezoidal cross section for the insertion of the entropy-elastic spring element (7), wherein all the recesses (13) form a ring which extends around in a circular manner and is adjoined by the equidistant projections and indentations (11, 12).

8. Ball joint according to any one of Claims 1 to 7, **characterised in that** the entropy-elastic spring element (7) consists of an elastomer ring, the cross-sectional shape of which is composed on the outside of a rectangle (23) and on the inside of a triangle (24), wherein all the edge regions (25) are radially rounded.

9. Ball joint according to any one of Claims 1 to 8, **characterised in that** the entropy-elastic spring element (7) projects beyond the upper edge (17a) of the flange (17) of the lower bearing shell (5) before the cover (3) is inserted by a height (f) which corresponds to the desired spring bias (Fv).

10. Ball joint according to any one of Claims 1 to 9, **characterised in that** the entropy-elastic spring element (7) lies at one of its triangle faces (26) and one of its plane rectangle faces (27) on the recesses (13) of the ribs (11) of the upper bearing shell (6) and by way of its plane outer circumferential side (28) against the ring (19) of the channels (21) and ribs (20) of the lower bearing shell (5), and is pressed by the cover (3) against these ribs (11, 20) and into the channels (12, 21) and against the ribs and into the channels of the cover (3) under the spring bias (Fv) after reaching its final assembly position.

11. Ball joint according to any one of Claims 1 to 10, **characterised in that** the entropy-elastic spring element (7) is also provided at its contact faces (26, 27, 28) with projecting ribs which engage in the adjoining channels (21, 12) of the lower and the upper bearing shell (5, 6) and of the cover (3).

12. Ball joint according to any one of Claims 1 to 11, **characterised in that** the lower bearing shell (5) is made of a highly wear-resistant plastics material such as PEEK, PEI, PA 66, GFRP (A3 WG6).

13. Ball joint according to any one of Claims 1 to 12, **characterised in that** the upper bearing shell (6) consists either of POM, PA 66 or of PEEK or PEI.

14. Ball joint according to any one of Claims 1 to 13, **characterised in that** the entropy-elastic spring element (7) is made of an acrylonitrile-butadiene polymer with a Shore hardness A of 80 ± 5.

## Revendications

1. Articulation à rotule ayant un boîtier refermé par un chapeau, un coussinet et une rotule d'articulation avec un axe d'articulation, reçu de façon pivotante et oscillante dans ce coussinet, une tige de l'axe ressortant d'une ouverture du boîtier située à l'opposé du chapeau, le coussinet dont la face extérieure est pourvue de saillies et de renfoncements, ainsi qu'un élément ressort précontraint, à élasticité entropique, étant immobilisés dans le boîtier par le chapeau,
**caractérisée en ce que** le coussinet est constitué d'un coussinet inférieur et d'un coussinet supérieur (5, 6), et que le coussinet inférieur (5), qui recouvre partiellement le coussinet supérieur (6) à sa face intérieure (56) et le coussinet supérieur (6), est pourvu, à sa face extérieure (6a), de saillies et de renfoncements (20, 21; 11, 12) avec lesquels coopère l'élément ressort (7) à élasticité entropique par conjugaison des formes et/ou par frottement, sous l'action du chapeau (3) placé dans sa position de fermeture, en accouplant ainsi les deux coussinets (5, 6) l'un à l'autre de manière immobile en rotation.

2. Articulation à rotule selon la revendication 1, **caractérisée en ce que** le coussinet inférieur (5) est pourvu, à son extrémité (5a) qui recouvre le coussinet supérieur (6), d'une collerette (17) qui est serrée de manière immobile en rotation entre un embrèvement (18) du boîtier (2) et le chapeau (3).

3. Articulation à rotule selon la revendication 1, **caractérisée en ce que** le chapeau (3) aussi comporte, à sa face inférieure (3a), des saillies et des renfoncements, dans lesquels s'engage l'élément ressort (7) à élasticité entropique, pour accoupler les deux coussinets (5, 6) au chapeau (3) de manière mécanique et immobile en rotation.

4. Articulation à rotule selon l'une des revendications 1 à 3, **caractérisée en ce que** les saillies et les renfoncements des deux coussinets (5, 6) et du chapeau (3) sont formés par des nervures (20, 11) et des rainures (21, 12) connues en soi, qui s'étendent toutes radialement par rapport à l'axe longitudinal (10) et de manière équidistante les unes des autres.

5. Articulation à rotule selon l'une des revendications 1 à 4, **caractérisée en ce que** la face intérieure (5b) du coussinet inférieur (5) est pourvue, à proximité de sa collerette (17), d'une couronne périphérique (19) de nervures (20) et de rainures (21).

6. Articulation à rotule selon l'une des revendications 1 à 5, **caractérisée en ce que** le coussinet supérieur (6) présente une forme de cloche connue en soi et est pourvu, à sa face extérieure (6a), des nervures (11) et des rainures (12) qui s'étendent radialement.

7. Articulation à rotule selon la revendication 6, **caractérisée en ce que** les nervures (11) du coussinet supérieur (6) comportent un décrochement périphérique (13) de section à peu près trapézoïdale, s'étendant radialement, permettant l'insertion de l'élément ressort (7) à élasticité entropique, tous les décrochements (13) formant ensemble un anneau périphérique circulaire où se terminent les saillies et renfoncements équidistants (11,12).

8. Articulation à rotule selon l'une des revendications 1 à 7, **caractérisée en ce que** l'élément ressort (7) à élasticité entropique est constitué par une bague élastomère dont la forme de section transversale se compose, du côté extérieur, d'un rectangle (23) et, du côté intérieur, d'un triangle (24), toutes les zones d'arêtes (25) étant radialement arrondies.

9. Articulation à rotule selon l'une des revendications 1 à 8, **caractérisée en ce qu'**avant le montage du chapeau (3), l'élément ressort (7) à élasticité entropique dépasse le bord supérieur (17a) de la collerette (17) du coussinet inférieur (5) d'une hauteur (f) correspondant à la précontrainte souhaitée (Fv) du ressort.

10. Articulation à rotule selon l'une des revendications 1 à 9, **caractérisée en ce que** l'élément ressort (7) à élasticité entropique s'appuie, avec l'une de ses surfaces de triangle (26), et l'une de ses surfaces de rectangle (27), sur les décrochements (13) des nervures (11) du coussinet supérieur (6), et s'appuie, par sa face périphérique plane (28) sur la couronne (19) de rainures (21) et de nervures (20) du coussinet inférieur (5), et est serré contre ces nervures (11, 20) et rainures (12, 21) ainsi que contre les nervures et les rainures du chapeau (3), par le chapeau (3), sous une force de précontrainte (Fv) du ressort, lorsque le chapeau se trouve dans sa position finale de montage.

11. Articulation à rotule selon l'une des revendications 1 à 10, **caractérisée en ce que** les surfaces d'appui (26, 27, 28) de l'élément ressort (7) à élasticité entropique sont également pourvues de nervures saillantes qui s'engagent dans les rainures contiguës (21, 12) des coussinets inférieur et supérieur (5, 6), ainsi que celles du chapeau (3).

12. Articulation à rotule selon l'une des revendications 1 à 11, **caractérisée en ce que** le coussinet inférieur (5) est fabriqué en une matière synthétique à haute résistance à l'usure, telle que du PEEK, du PEI, du PA 66 ou du GFK (A3 WG6).

13. Articulation à rotule selon l'une des revendications 1 à 12, **caractérisée en ce que** le coussinet supérieur (6) est fait soit en POM, en PA 66, ou encore en PEEK ou en PEI.

14. Articulation à rotule selon l'une des revendications 1 à 13, **caractérisée en ce que** l'élément ressort (7) à élasticité entropique est fabriqué à partir d'un polymère d'acrylnitrile-butadiène ayant une dureté Shore A de 80 ± 5.
